# EUROPÄISCHE PATENTANMELDUNG

(11) **EP 2 182 607 A1**
(43) Veröffentlichungstag der Anmeldung: **05.05.2010**
(21) Anmeldenummer: 08018785.9
(22) Anmeldetag: 28.10.2008
(51) Int. Cl.: H02J 3/00, H02J 7/00, B60L 11/18, G07F 7/00

(54) **Vorrichtung zur Abgabe von elektrischer Energie**

(71) Anmelder: Scheidt & Bachmann GmbH, 41238 Mönchengladbach (DE)
(72) Erfinder: Miller, Norbert, 41063 Mönchengladbach (DE)
(74) Vertreter: Stenger, Watzke & Ring

(57) **Zusammenfassung**

Die vorliegende Erfindung betrifft eine Vorrichtung zur Abgabe von elektrischer Energie sowie ein Verfahren zum Betrieb der Vorrichtung. Zur Schaffung einer Vorrichtung mit einfachen Mitteln, die es erlaubt, auf einfache Weise und kostengünstig Energie, insbesondere zum Aufladen eines elektrischen Energiespeichers bereitzustellen, wird mit der Erfindung eine Vorrichtung zur Abgabe von elektrischer Energie mit einer elektrischen Anschlusseinheit zur lösbaren elektrischen Ankopplung eines elektrischen Verbrauchers, insbesondere eines aufzuladenden elektrischen Energiespeichers, einer insbesondere tarifgesteuerten Energieabgabesteuerungseinheit zum Schalten einer elektrischen Spannung, sowie einer elektrischen Verbindung zu wenigstens einer Energieerzeugungseinrichtung zur Erzeugung elektrischer Energie vorgeschlagen, wobei die Vorrichtung einen Energiebezugszähler sowie einen Energieabgabezähler aufweist.

## Beschreibung

Die vorliegende Erfindung betrifft eine Vorrichtung zur Abgabe von elektrischer Energie sowie ein Verfahren zum Betrieb der Vorrichtung.

Die Diskussion ökologischer Auswirkungen der Erzeugung elektrischer Energie sowie deren möglichst optimaler Nutzung hat bereits zu einer Erhöhung des Anteils regenerativer Energien bei der elektrischen Energieerzeugung geführt. In den kommenden 30 Jahren wird damit gerechnet, dass der Anteil regenerativer Energien an der Gesamterzeugung elektrischer Energie auf 30 % steigen wird. Dabei wird erwartet, dass der prognostizierte Anstieg der regenerativen Energien im wesentlichen durch einen weiteren Ausbau von Windkraft- und Solaranlagen erfolgen wird.

Bereits jetzt zeigt sich ein Nachteil dieser Art der regenerativen Energieerzeugung, und zwar die geringe, planbare Verfügbarkeit. Infolgedessen wird es erforderlich sein, Kraftwerke so auszulegen, dass sie nach wie vor im wesentlichen alleine die Energieversorgung zu Spitzenlastzeiten gewährleisten können. Dies führt unter anderem dazu, dass elektrische Energie dann zur Verfügung steht, wenn sie eigentlich nicht benötigt wird, insbesondere außerhalb der Spitzenlastzeiten. Ein solcher Überschuss an Energie wird von den Energieerzeugern mit einem "negativen" Grundpreis an Verbraucher abgegeben, die, in gewissen Grenzen, zu beliebigen Zeiten diese Energie abnehmen können. Ein typisches Beispiel für solche Verbraucher sind beispielsweise Kühlhäuser, elektrogalvanische Anlagen und dergleichen. Die Zunahme des Anteils regenerativer Energien an der Gesamtenergieversorgung wird demnach nicht in gleichem Maße eine Reduktion der Kraftwerkskapazitäten zur Folge haben. Daraus folgt ferner, dass die Nachfrage nach elektrischen Energiespeichern zunehmen wird.

Insbesondere ist zu erwarten, dass ein hoher Rohölpreis im Bereich der Mobilität zu negativen Auswirkungen führen kann. Dies hat zur Folge, dass bereits heute an alternativen Antriebsmöglichkeiten für Fahrzeuge, insbesondere im Personenverkehr gearbeitet wird. Bereits jetzt sind Fahrzeuge verfügbar, die einen Hybridantrieb aufweisen, das heißt, eine Kombination aus einem herkömmlichen Verbrennungsmotor in Verbindung mit einem Elektromotor. Reine elektrische Antriebe für Fahrzeuge sind bislang im wesentlichen im Laborbetrieb und bei beschränkten speziellen Anwendungen verfügbar. Einer breiten Durchsetzung eines reinen elektrischen Antriebs steht im Moment entgegen, dass zum einen die Reichweite derartiger Fahrzeuge gegenüber herkömmlichen Fahrzeugen mit Verbrennungsmotoren aufgrund der vergleichbar geringen Energiedichte bei elektrischen Energiespeichern, insbesondere bei Akkumulatoren, deutlich niedriger ist und dass ein Netz von Stationen zum Laden des elektrischen Energiespeichers, vorzugsweise des Akkumulators, bislang vollkommen unzureichend verfügbar ist, so dass hierdurch eine zusätzliche Einschränkung bei der Nutzung von Fahrzeugen mit elektrischem Antrieb die Folge ist. Darüber hinaus ist bei elektrischen Antrieben mit Energiespeichern wie Akkumulatoren zu beachten, dass diese nicht einfach in kurzer Zeit geladen werden können, das heißt, in einem Zeitraum, der einem herkömmlichen Tankvorgang an der Tankstelle bei einem verbrennungsmotorbetriebenen Fahrzeug entspricht. Ein Austausch des Akkumulators an einer Tankstelle gegen einen aufgeladenen Akkumulator erweist sich ebenfalls als unpraktisch, da üblicherweise die elektrischen Energiespeicher, insbesondere durch Akkumulatoren gebildete Energiespeicher, von hohem Gewicht sind und darüber hinaus elektrische und mechanische Anforderungen hinsichtlich des Betriebs und der elektrischen Sicherheit zu beachten sind, die einen einfachen Austausch des Akkumulators erschweren.

Der Erfindung liegt somit die **Aufgabe** zugrunde, mit einfachen Mitteln eine Vorrichtung zu schaffen, die es erlaubt, auf einfache Weise und kostengünstig Energie, insbesondere zum Aufladen eines elektrischen Energiespeichers bereitzustellen.

Als **Lösung** wird mit der Erfindung eine Vorrichtung zur Abgabe von elektrischer Energie mit einer elektrischen Anschlusseinheit zur lösbaren elektrischen Ankopplung eines elektrischen Verbrauchers, insbesondere eines aufzuladenden elektrischen Energiespeichers, einer insbesondere tarifgesteuerten Energieabgabesteuerungseinheit zum Schalten einer elektrischen Spannung, sowie einer elektrischen Verbindung zu wenigstens einer Energieerzeugungseinrichtung zur Erzeugung elektrischer Energie vorgeschlagen, wobei die Vorrichtung einen Energiebezugszähler sowie einen Energieabgabezähler aufweist.

Erstmals erlaubt es somit die Erfindung, auf einfache Weise und kostengünstig entsprechende Vorrichtungen zur Abgabe von elektrischer Energie zu schaffen, so dass beispielsweise bei dem flächendeckenden Einsatz von elektrisch angetriebenen Fahrzeugen eine wichtige Hürde genommen werden kann. Der elektrische Verbraucher kann beispielsweise ein elektrisch angetriebenes Fahrzeug, aber auch ein anderes elektrisch betriebenes, insbesondere mobiles Gerät, beispielsweise ein Mobilfunkendgerät, ein Laptop oder dergleichen sein, welches in regelmäßigen Abständen mit Energie zu versorgen ist. Die Anschlusseinheit erlaubt es, eine Kopplung der Vorrichtung mit dem Verbraucher herzustellen, damit der Verbraucher aus der Vorrichtung mit elektrischer Energie versorgt, insbesondere ein Akkumulator geladen werden kann. Dabei ist vorgesehen, dass die elektrische Ankopplung lösbar ausgebildet ist, so dass der elektrische Verbraucher zu einem vorgebbaren oder auch beliebigen Zeitpunkt mit der Vorrichtung elektrisch gekoppelt werden kann beziehungsweise von dieser elektrisch abgekoppelt werden kann. Die Anschlusseinheit kann beispielsweise eine elektrische Steckverbindung aufweisen, die insbesondere durch einen Stecker auf der einen Seite, zum Beispiel der Anschlusseinheit, sowie eine Steckkupplung auf der anderen Seite, zum Beispiel dem Verbraucher, gebildet sein kann. Die Anschlusseinheit ist entsprechend der zu erwartenden elektrischen Belastung ausgelegt. Natürlich kann die Anschlusseinheit auch mehrere, unterschiedliche Steckverbindungen aufweisen, die bedarfsweise mit dem Verbraucher gekoppelt werden können. Dies erhöht die Flexibilität der Vorrichtung, insbesondere bei sehr unterschiedlichen elektrischen Verbrauchern, beispielsweise Aufladen eines Akkumulators eines Fahrzeugs oder Aufladen eines Akkumulators eines Mobilfunkendgerätes. Aufgrund der für diese beiden sehr unterschiedlichen Akkumulatoren erforderlichen elektrischen Parameter wie Strom, Spannung und dergleichen, ist die Anschlusseinheit beziehungsweise sind die Steckverbindungen in der Regel sehr unterschiedlich ausgebildet. Damit die Vorrichtung über einen weiten Bereich einsetzbar ist, kann die Anschlusseinheit entsprechend geeignete Steckverbindungsmöglichkeiten aufweisen, die bedarfsweise parallel oder auch selektiv betrieben werden können.

Der Energiespeicher kann natürlich nicht nur durch einen Akkumulator wie einem Blei-Säure-Akkumulator, einem Metallhydrid-Akkumulator, einem Lithium-ion-Akkumulator oder dergleichen gebildet sein, es kann darüber hinaus auch die Verwendung eines Kondensators vorgesehen sein, beispielsweise eines Elektrolytkondensators oder dergleichen, der mit elektrischer Energie versorgt werden soll. Natürlich können auch Parallelschaltungen von Akkumulatoren und Kondensatoren oder dergleichen, oder auch Reihen- oder Matrixschaltungen vorgesehen sein.

Ferner ist eine elektrische Verbindung zu wenigstens einer Energieerzeugungseinrichtung vorgesehen, mit der die elektrische Energie erzeugt werden kann. Eine Energieerzeugungseinrichtung kann beispielsweise durch ein Kraftwerk wie ein Kohlekraftwerk, ein Kernkraftwerk, ein Gaskraftwerk, Kombinationen hiervon oder dergleichen, aber auch durch eine Windkraftanlage, eine Solaranlage oder dergleichen gebildet sein. Natürlich können derartige Anlagen auch in Kombination miteinander die Energieerzeugungseinrichtung bilden. Die eine oder auch mehrere Energieerzeugungseinrichtungen sind über ein elektrisches Energieverteilungsnetz miteinander und mit den elektrischen Verbrauchern gekoppelt. Gleiches gilt für die Vorrichtung, die ebenfalls über eine elektrische Verbindung mit der wenigstens einen Energieerzeugungseinrichtung elektrisch gekoppelt ist, wobei die elektrische Verbindung vorzugsweise durch ein öffentliches Energieversorgungsnetz gebildet sein kann. Dabei bewirkt der Anschluss an ein öffentliches Energieversorgungsnetz, dass die Vorrichtung zugleich mit sämtlichen, mit dem öffentlichen Energieversorgungsnetz verbundenen Energieerzeugungseinrichtungen elektrisch verbunden sein kann.

Die Vorrichtung weist ferner einen Energiebezugszähler auf, mit dem der Bezug an elektrischer Energie von der Energieerzeugungseinrichtung beziehungsweise der Vielzahl von Energieerzeugungseinrichtungen ermittelt werden kann. Der Energiebezugszähler ermöglicht es, die von der Vorrichtung bezogene Energiemenge zu erfassen, die im weiteren Verlauf als Basis für eine Abrechnung gegenüber den Betreibern der Energieerzeugungseinrichtung beziehungsweise der Energieerzeugungseinrichtungen dienen kann. Der Energiebezugszähler kann ferner zugleich die Zeit erfassen, so dass beispielsweise der Bezug der elektrischen Energie zeitbezogen ermittelt werden kann. Hierdurch ist es möglich, die Vorrichtung derart zu steuern, dass vorzugsweise Energie dann bezogen wird, wenn im Energieversorgungssystem ein Überschuss an elektrischer Energie durch die Energieerzeugungseinrichtungen vorliegt. Auf diese Weise kann die Vorrichtung dazu verwendet werden, einen Überschuss an elektrischer Energie zu verwerten und auf diese Weise zur Stabilität des gesamten Energieversorgungsnetzes beizutragen. Auch kann hierauf basierend eine Tarifsteuerung erreicht werden.

Darüber hinaus weist die Vorrichtung einen Energieabgabezähler auf. Der Energieabgabezähler erfasst die an den Verbraucher abgegebene Energiemenge. Vorzugsweise wird auch hier die Energiemenge zeitbezogen erfasst. Darüber hinaus besteht die Möglichkeit, den Energieabgabezähler tarifgesteuert zu betreiben, das heißt, dass entsprechend eines aktuellen beziehungsweise insbesondere durch einen Nutzer ausgewählten Tarifs elektrische Energie abgegeben und in Rechnung gestellt wird. Der Nutzer des Verbrauchers hat die Möglichkeit, zwischen unterschiedlichen Tarifen je nach Bedarf und Verfügbarkeit zu wählen, um so den für ihn kostengünstigsten Tarif auswählen zu können. So kann beispielsweise vorgesehen sein, dass der Verbraucher an die Vorrichtung angeschlossen wird und der Nutzer des Verbrauchers einen Tarif auswählt, der jedoch nur in bestimmten, vorgegebenen Zeiträumen beziehungsweise nur zu Zeitpunkten, zu denen ein entsprechend hoher Energieüberschuss im Energieversorgungssystem vorliegt, verfügbar ist. Letzteres kann dazu führen, dass der Verbraucher über einen längeren Zeitraum zum Aufladen des Energiespeichers mit der Vorrichtung gekoppelt sein muss, da der Tarif nur die Entnahme einer bestimmten vorgebbaren Menge an Energie in einem bestimmten Zeitraum erlauben kann oder dergleichen.

Die einfache Ausbildung der Vorrichtung erlaubt es darüber hinaus, die Vorrichtung räumlich verteilt über einen großen Bereich anzuordnen, und eine flächendeckende Versorgung bereitzustellen. Als besonders vorteilhaft erweist es sich, wenn die Energiezähler, insbesondere der tarifgesteuerte Energieabgabezähler fernsteuerbar beziehungsweise fernabfragbar ist, so dass beispielsweise die unterschiedlichen, räumlich verteilten Anschlusseinheiten durch eine entfernt angeordnete Zentrale erfasst werden können. Der Energieabgabezähler kann beispielsweise die Informationen dafür liefern, auf welcher Basis die bezogene Energie mit dem Nutzer des Verbrauchers abgerechnet werden kann. So kann beispielsweise vorgesehen sein, dass der Nutzer ein Konto bei einem Betreiber der Vorrichtung eingerichtet hat, das beispielsweise durch die Zentrale verwaltet wird. Der Nutzer bezieht Energie für seinen Verbraucher aus der Vorrichtung, die mittels des tarifgesteuerten Energieabgabezählers erfasst und an die Zentrale übermittelt wird. Zu bestimmten, vorgebbaren Zeitpunkten oder auch kontinuierlich oder auch nach Abschluss des Energiebezugs wird ein tarifbasierter, zu zahlender Betrag ermittelt, der vorzugsweise mittels einer Transaktion von dem Nutzerkonto abgebucht wird. Auf diese Weise kann eine hohe Flexibilität hinsichtlich der Nutzung der Vorrichtung erreicht werden. Natürlich kann auch vorgesehen sein, dass der Nutzer einen zu erwartenden Betrag zumindest teilweise vorab entrichtet, beispielsweise in Form einer Zahlungstransaktion an einen Betreiber beziehungsweise die Zentrale oder dergleichen.

Betreiber für die erfindungsgemäße Vorrichtung kann beispielsweise der Nutzer eines Verbrauchers selbst sein, aber auch beispielsweise der Fahrer des Fahrzeugs, ein Parkhausbetreiber, ein Fahrzeughersteller, ein Energieversorger, ein Unternehmen, insbesondere mit einem eigenen Parkplatz, Wohnungsbaugesellschaften, öffentliche Einrichtungen, Messegesellschaften und dergleichen.

Ferner ist eine Energieabgabesteuerungseinheit vorgesehen, mittels der die Abgabe und auch der Bezug von elektrischer Energie steuerbar ist. Hierfür kann die Energieabgabesteuerungseinheit eine Schalteinheit aufweisen, mittels welcher Schalteinheit eine elektrische Spannung geschaltet werden kann und die bedarfsgerecht steuerbar ist. Mittels der Schalteinheit kann die Anschlusseinheit für die Energieabgabe freigeschaltet werden. Die Energieabgabesteuerungseinheit kann ferner Messmittel umfassen, mittels derer eine Überwachung elektrischer Parameter der Energieabgabe und/oder des Energiebezugs erfasst werden können. Die Messmittel können beispielsweise auch eine Spannungsart des Verbrauchers erfassen. Die Energieabgabesteuerungseinheit ist vorzugsweise tarifgesteuert, so dass die Abgabe von Energie anhand insbesondere durch den Nutzer auswählbarer und/oder vorgebbarer Tarife erfolgen kann. Die Energieabgabesteuerungseinheit kann ferner mit der Zentrale in Kommunikationsverbindung stehen, so dass die Zentrale vorzugsweise sämtliche abrechnungsrelevanten Informationen erhält. Die Zentrale kann die Tarife auswählbar bereitstellen. Hierzu können die Tarife an die Vorrichtung übermittelt werden. Die Übermittlung kann auf Anforderung durch den Nutzer erfolgen. Die Tarife können auch in vorgebbaren Zeitabständen aktualisiert werden. Vorzugsweise können Tarife mit einer Gültigkeitskennzeichnung versehen sein, so dass sie nur während eines Gültigkeitszeitraumes durch den Nutzer ausgewählt werden können.

Eine weitere Ausgestaltung der Erfindung sieht vor, dass die Vorrichtung eine Spannungswandlereinheit aufweist, mittels der, vorzugsweise automatisch, die für den Verbraucher geeignete elektrische Spannungsart bereitstellbar ist. Mit Spannungsart ist hier nicht nur die Höhe, Frequenz oder dergleichen der elektrischen Spannung gemeint, sondern auch, ob es sich um eine Wechselspannung, eine Gleichspannung oder dergleichen handelt. Die Spannungswandlereinheit erlaubt es, für unterschiedliche Spannungsarten bestimmte Verbraucher an eine beispielsweise genormte Spannung eines öffentlichen Energieversorgungsnetzes anzupassen. Dies ermöglicht es, die Vielseitigkeit der Vorrichtung weiter zu erhöhen. So kann beispielsweise vorgesehen sein, dass der elektrische Verbraucher mit der Anschlusseinheit gekoppelt wird, und der Nutzer des Verbrauchers an einer Eingabeeinheit den Typ des Verbrauchers auswählt, so dass die Spannungswandlereinheit auf die geeignete elektrische Spannungsart eingestellt wird. Darüber hinaus kann vorgesehen sein, dass beispielsweise ein maximaler Bezugsstrom eingestellt wird, so dass ein Überlasten des Verbrauchers vermieden werden kann. Auch dieser Wert für den maximalen Bezugsstrom kann einstellbar beziehungsweise auswählbar einstellbar vorgesehen sein. Besonders vorteilhaft erweist sich diese Anwendung bei Verbrauchern, die mit Gleichspannung betrieben werden, weil eine Stromeinstellung mit wenigen, kostengünstigen Mitteln realisierbar ist.

Eine Weiterbildung der Erfindung sieht vor, dass die Vorrichtung eine Erkennungseinheit zur Erkennung der für einen angeschlossenen Verbraucher geeigneten elektrischen Spannungsart aufweist. Die Erkennungseinheit kann beispielsweise dafür ausgebildet sein, eine am Verbraucher beziehungsweise seines Steckverbinders vorgesehene Codierung zu erfassen, so dass die für den Verbraucher geeignete Spannungsart insbesondere aus einer Tabelle ermittelt werden kann. Aufgrund der Erkennung der Codierung kann beispielsweise die Spannungswandlereinheit automatisch auf die für den Verbraucher geeignete elektrische Spannungsart eingestellt werden. Die Codierung kann beispielsweise in Form eines Barcodes, eines mechanischen Stiftcodes, eines elektronisch auslesbaren Codes, beispielsweise aus einem Transponder, oder dergleichen gebildet sein. Natürlich können auch moderne Codierungsmittel und Verschlüsselungen zum Einsatz kommen, um die Zuverlässigkeit der Erkennung zu verbessern.

Darüber hinaus kann vorgesehen sein, dass die Anschlusseinheit für einen kontaktlosen Anschluss des Verbrauchers ausgebildet ist. Dies hat den Vorteil, dass eine Steckverbindung des Verbrauchers zur Anschlusseinheit eingespart werden kann. Darüber hinaus erweist es sich insbesondere bei Fahrzeugen als vorteilhaft, wenn diese lediglich in eine vorgegebene Position verfahren werden müssen und automatisch ein Anschluss an die Anschlusseinheit gewährleistet werden kann. Hierzu kann beispielsweise vorgesehen sein, dass die Anschlusseinheit eine Kopplungsmöglichkeit mittels einer feldbasierten Kopplungseinheit über ein Feld, beispielsweise ein magnetisches Wechselfeld, ein elektromagnetisches Feld oder auch ein elektrisches Feld oder dergleichen bereitstellt. So kann bei Abstellen des Fahrzeugs automatisch ein Laden gemäß Tarifplanung und/oder Ladeplan automatisch gewährleistet werden, solange das Fahrzeug an einem dafür bestimmten Platz abgestellt ist. Sobald der Nutzer das Fahrzeug wieder nutzen möchte, kann er dies tun, ohne zunächst Verbindungen lösen zu müssen. Dies hat unter anderem den Vorteil, dass Bedienaufwand für den Nutzer entfällt. So kann beispielsweise vermieden werden, dass der Nutzer das Fahrzeug wieder in Betrieb nimmt, wobei er vergessen hat, zuvor die Verbindung zu lösen und beim Losfahren die Anschlusseinheit und/oder das Fahrzeug beschädigt. Solche Anschlusseinheiten können beispielsweise an Parkplätzen, insbesondere an öffentlichen Parkplätzen und dergleichen vorgesehen sein. Es kann darüber hinaus vorgesehen sein, dass die feldbasierte Kopplungseinheit sowohl in der Anschlusseinheit als auch im Verbraucher vorgesehen ist. Sobald die feldbasierte Kopplungseinheit des Verbrauchers in den Nahbereich einer feldbasierten Kopplungseinheit der Anschlusseinheit gelangt, kann automatisch mit einer Energieabgabe der Vorrichtung begonnen werden. Darüber hinaus hat diese Ausgestaltung den Vorteil des geringen Verschleißes, da keinerlei mechanische Elemente erforderlich beziehungsweise betätigbar sind. Weiterhin erweist es sich als vorteilhaft, dass eine galvanische Trennung zwischen der Vorrichtung und dem Verbraucher erreicht werden kann. Dies erhöht die elektrische Sicherheit und reduziert die Problematik hinsichtlich elektromagnetischer Störungen.

Eine weitere Ausgestaltung der Erfindung sieht vor, dass die Anschlusseinheit für einen Anschluss mehrerer, insbesondere unterschiedlicher Verbraucher ausgebildet ist. So kann vorgesehen sein, dass die Anschlusseinheit nicht nur für den Anschluss eines Fahrzeugs ausgebildet ist, sondern beispielsweise auch für den Anschluss eines anderen elektrischen Gerätes, beispielsweise eines Laptops, eines Mobilfunkendgerätes, eines PDA's, einer mobilen Spielkonsole oder dergleichen. Die Anschlusseinheit kann auch mehrere Anschlüsse aufweisen, die beispielsweise als Steckverbindung ausgebildet sein können. Natürlich können auch entsprechende kontaktlose Anschlusseinheiten vorgesehen sein, mit denen unterschiedliche Verbraucher angekoppelt werden können.

Weiterhin kann die Anschlusseinheit eine Sicherungseinrichtung aufweisen. Die Sicherungseinrichtung kann dazu vorgesehen sein, eine Berechtigung zu erfassen, die einen Verbraucher berechtigt, elektrische Energie von der Anschlusseinheit zu beziehen. Die Berechtigung kann beispielsweise durch einen Identifikationscode oder dergleichen gebildet sein, der abfragbar am Verbraucher angeordnet ist. Der Berechtigungscode kann beispielsweise durch eine Zeichenkette aus alphanumerischen Zeichen gebildet sein, die zudem verschlüsselt sein kann. Die Berechtigung beziehungsweise der Identifikationscode kann beispielsweise in Form eines Barcodes, eines mehrdimensionalen Barcodes, einer Steckercodierung, oder auch elektronisch in Form eines auslesbaren Transponders oder dergleichen vorgesehen sein. Die Sicherungseinrichtung kann auch wenigstens teilweise einstückig mit der Erkennungseinheit ausgebildet sein. Zum Auslesen der Berechtigung beziehungsweise des Identifikationscodes kann an der Anschlusseinheit eine entsprechende Leseeinrichtung angeordnet sein. Die Leseeinrichtung ist vorzugsweise an die Erfassung der Berechtigung beziehungsweise des Identifikationscodes angepasst ausgebildet. Die Leseeinrichtung kann hierfür beispielsweise eine Infrarotleseeinheit aufweisen, mit der ein Barcode abgescannt werden kann. Weiterhin kann die Leseeinrichtung auch zum drahtlosen Auslesen eines Transponders ausgebildet sein. Vorzugsweise stellt die Leseeinrichtung in diesem Fall die Energie zum Betrieb des Transponders bereit, der am Verbraucher angeordnet ist.

Gemäß einer weiteren Ausgestaltung weist die Vorrichtung eine Selektionseinheit auf, mittels der die elektrische Verbindung zu einer von mehreren Energieerzeugungseinrichtungen auswählbar und herstellbar ist. Diese Ausgestaltung eröffnet die Möglichkeit, unterschiedliche Energieerzeugungseinrichtungen, insbesondere auch hinsichtlich der Spannungsart in geeigneter Weise auswählen zu können. So kann beispielsweise vorgesehen sein, dass eine elektrische Energieerzeugungseinrichtung eine Wechselspannung bereitstellt, wohingegen eine weitere Energieerzeugungseinrichtung eine Gleichspannung bereitstellt. Je nach Verbraucher kann die geeignete Energieerzeugungseinrichtung ausgewählt werden. Darüber hinaus bietet diese Ausgestaltung die Möglichkeit, selektiv eine elektrische Verbindung zu einer ausgewählten Energieerzeugungseinrichtung herzustellen, die beispielsweise besonders günstig elektrische Energie bereitstellt. So kann mit einem Energieversorger einer an einem öffentlichen Energieversorgungsnetz angeschlossenen Energieerzeugungseinrichtung eine Vereinbarung zum Bezug von elektrischer Energie getroffen werden, wobei die elektrische Energie über das öffentliche Energieversorgungsnetz an die Vorrichtung geliefert wird. Dies erlaubt es, vorteilhaft Energieerzeugungseinrichtungen auszuwählen, die aufgrund der aktuell produzierten Menge an elektrischer Energie im Energieversorgungsnetz besonders günstige Konditionen bereitstellen. Die Selektionseinheit kann hierfür Steuerungsbeziehungsweise Abrechnungsmittel bereithalten, mit denen Transaktionen durchführbar sind.

Weiterhin kann die Vorrichtung eine Abrechnungseinheit zur Abrechnung der abgegebenen und/oder bezogenen elektrischen Energie aufweisen. Mit der Abrechnungseinheit kann vorteilhaft die Abrechnung der abgegebenen Energie als auch der bezogenen Energie automatisiert werden. Dies erlaubt es, die Vorrichtung, auch wenn sie räumlich verteilt ist, flächendeckend kostengünstig zu betreiben.

Ferner kann die Vorrichtung eine Einrichtung zur Parkzeiterfassung umfassen. Dies erlaubt es, die Vorrichtung auch in Kombination mit Einrichtungen zur Parkzeiterfassung zu nutzen. So kann vorteilhaft eine vorhandene Parkraumbewirtschaftung um eine Energieversorgungsmöglichkeit von parkenden Fahrzeugen ergänzt werden.

Mit der Erfindung wird ferner ein Verfahren zum Betrieb einer Vorrichtung zur Abgabe von elektrischer Energie vorgeschlagen, wobei ein elektrischer Verbraucher, insbesondere ein aufzuladender, mobiler elektrischer Energiespeicher lösbar an die Vorrichtung angeschlossen wird, elektrische Energie von einer Energieerzeugungseinrichtung bezogen, der Bezug mittels eines Energiebezugszählers erfasst und mittels einer insbesondere tarifgesteuerten, schaltenden Energieabgabesteuerungseinheit über einen Energieabgabezähler an den Verbraucher abgegeben wird.

Die Energieabgabesteuerungseinheit ermöglicht es, die Abgabe der elektrischen Energie über die Anschlusseinheit an den elektrischen Verbraucher bedarfsgerecht zu steuern. Vorzugsweise ist die Energieabgabesteuerungseinheit schaltend ausgebildet, so dass in Abhängigkeit eines durch den Nutzer ausgewählten Tarifs eine elektrische Spannung beziehungsweise ein elektrischer Strom geschaltet beziehungsweise geregelt werden kann. Endet beispielsweise die Gültigkeit des ausgewählten Tarifs, kann die elektrische Spannung an der Anschlusseinheit abgeschaltet werden. Wird ein Tarif zu einem bestimmten Zeitpunkt gültig, kann ein automatisches Einschalten der elektrischen Spannung für die Anschlusseinheit vorgesehen sein. Vorzugsweise ist der Energieabgabezähler fernsteuerbar ausgebildet. Weiterhin kann vorgesehen sein, dass der Energiebezugszähler einstückig mit dem Energieabgabezähler ausgebildet ist. Beispielsweise kann der Energieabgabezähler auch gleichzeitig Teil des Energiebezugszählers sein. So besteht die Möglichkeit, dass der Energiebezugszähler durch die Summe aller Energieabgabezähler gebildet ist. Dies ermöglicht es, auf einfache Weise auch flächendeckend die Vorrichtung verfahrensgemäß zu betreiben.

Weiterhin schlägt die Erfindung vor, dass die elektrische Spannungsart des Verbrauchers, vorzugsweise automatisch, ermittelt und ausgewählt wird. Dies erlaubt es, auch fachunkundigen Nutzern des Verbrauchers auf einfache Weise die Nutzung der Vorrichtung zu eröffnen. Insbesondere die automatische Ermittlung und Auswahl ermöglicht es, dass der Nutzer bezüglich einer Funktion der Vorrichtung nicht mehr eingreifen braucht. Der Betrieb der Vorrichtung kann weiter vereinfacht werden.

Darüber hinaus wird vorgeschlagen, dass der Bezug der elektrischen Energie von der günstigsten Energieerzeugungseinrichtung ausgewählt wird. Günstig kann eine Energieerzeugungseinrichtung sein, wenn sie ortsnah bezüglich der Vorrichtung angeordnet ist, elektrische Energie zu einem niedrigen Preis bereitstellt, und/oder aus anderen, insbesondere technischen Gründen bevorzugt für die Belieferung mit elektrischer Energie ausgewählt wird. Vorzugsweise erfolgt die Auswahl automatisch nach vorgebbaren Kriterien, deren Erfüllung zu bestimmten Zeitpunkten geprüft wird. So kann vorgesehen sein, dass bei starker Sonneneinstrahlung eine solare Energieanlage mit der Versorgung von elektrischer Energie ausgewählt wird, wohingegen bei einem starken Windaufkommen die Versorgung mit elektrischer Energie aus einer Windanlage vorgesehen sein kann.

Es kann ferner vorgesehen sein, dass vor und/oder während der Abgabe elektrischer Energie eine Berechtigung des angeschlossenen Verbrauchers geprüft wird. Dies erlaubt es, die Berechtigung des Verbrauchers während der Bezugsdauer zu prüfen. So kann vermieden werden, dass Energie an einen zweiten Verbraucher abgegeben wird, wobei die Kosten dem Nutzer des zuvor angeschlossenen ersten Verbrauchers belastet werden. Eine missbräuchliche Nutzung kann reduziert werden. Die Prüfung kann zu vorgebbaren Zeitpunkten oder auch kontinuierlich durchgeführt werden. Insbesondere erfolgt die Prüfung, bevor Energie an den Verbraucher abgegeben wird. Natürlich kann auch vorgesehen sein, dass der Nutzer, sofern keine Berechtigung bei dem angeschlossenen Verbraucher vorliegt, in Form einer Vorkasse die Abgabe von elektrischer Energie an den Verbraucher auslösen kann. Hierzu kann beispielsweise im Bereich der Anschlusseinheit eine Zahlstelle vorgesehen sein, an der der Nutzer eine Zahlungstransaktion vornehmen kann, so dass eine Berechtigung nicht erforderlich ist.

Eine Weiterbildung sieht vor, dass eine Menge der abgegebenen elektrischen Energie anhand einer Tarifsteuerung des Energieabgabezählers abgerechnet wird. Diese Ausgestaltung eignet sich insbesondere für Nutzer, die bei dem Betreiber der Vorrichtung über ein Abrechnungskonto verfügen. Darüber hinaus ermöglicht diese Ausgestaltung die Abrechnung anhand tarifbezogener Energieabgaben, wobei während der Abgabe vorgenommene Tarifwechsel in die Abrechnung einfließen können. Dies ermöglicht es, eine hochflexible Abrechnungsmöglichkeit für den Betreiber der Vorrichtung zu schaffen.

Gemäß einer weiteren Ausgestaltung ist vorgesehen, dass die Energieabgabe zu vorgebbaren Zeitpunkten begonnen und/oder beendet wird und/oder in vorgebbaren Zeiträumen erfolgt. Diese Ausgestaltung erlaubt es dem Nutzer, Zeiten beziehungsweise Zeiträume vorzugeben, in denen die Energieabgabe erfolgen kann. Vorteilhaft ist diese Ausgestaltung unter anderem dann, wenn bei einem elektrisch angetriebenen Fahrzeug eine Energieabgabe nur dann erfolgen soll, wenn dieses Fahrzeug für einen längeren Zeitraum an der abgestellten Stelle verbleibt. So kann beispielsweise vorgesehen sein, dass eine Energieabgabe nur während der Nachtzeiten oder während einer Arbeitszeit erfolgt, während derer der Nutzer das Fahrzeug nicht benötigt. Dies spart unnötige kurzzeitige Kopplungsvorgänge des Verbrauchers an die Anschlusseinheit ein. Auch die Nutzung kostengünstiger Tarife kann hierdurch erreicht werden. Die Zeiträume können von Zeiträumen der Gültigkeit eines ausgewählten Tarifs überlagert werden.

Eine besonders vorteilhafte Ausgestaltung sieht vor, dass eine verbraucherbezogene Energieabgabekennlinie verwendet wird. Hierdurch kann erreicht werden, dass der Verbraucher optimal mit Energie versorgt wird. Insbesondere, wenn ein elektrischer Energiespeicher in Form eines Akkumulators geladen werden soll, erweist es sich als vorteilhaft, wenn eine Ladekennlinie für den Akkumulator verwendet wird, um diesen aufzuladen. Dies optimiert nicht nur den Ladevorgang an sich, sondern erlaubt es darüber hinaus, dessen Lebensdauer und Zuverlässigkeit möglichst lange aufrechtzuerhalten. So kann beispielsweise vorgesehen sein, dass eine von der Erkennungseinheit erkannte Codierung es erlaubt, eine entsprechende Kennlinie vorrichtungsseitig bereitzustellen, um eine optimale Energieabgabe für den Verbraucher erreichen zu können. Vorzugsweise ist die Kennlinie derart ausgebildet, dass eine möglichst schnelle Aufladung des Energiespeichers bei geringer Alterung erreicht werden kann.

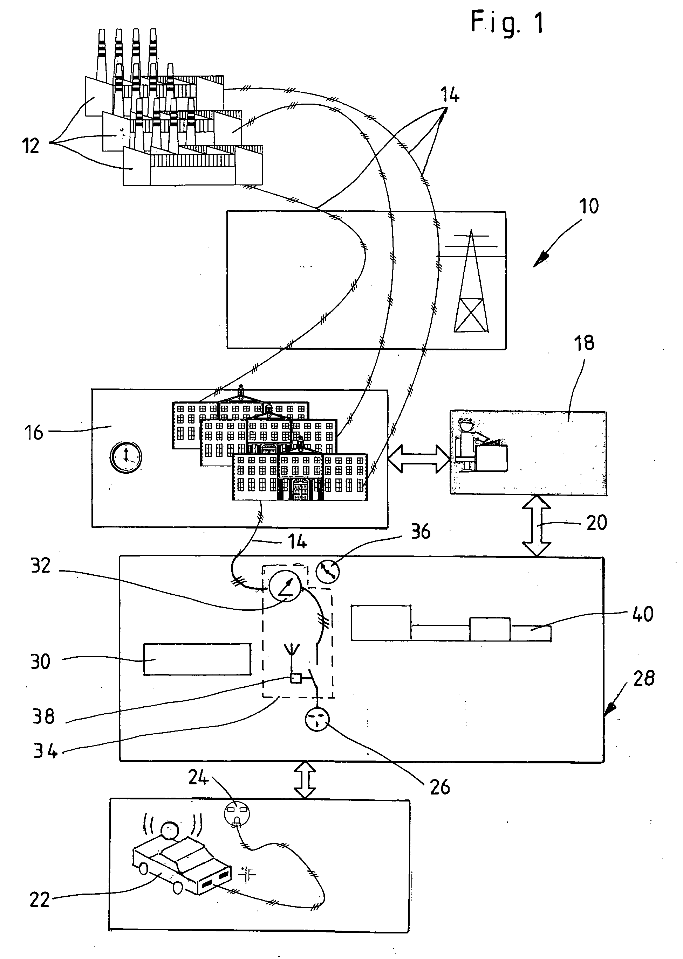

Weitere Vorteile und Merkmale sind der folgenden Beschreibung eines Ausführungsbeispiels zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel gemäß Fig. 1 verwiesen. Die Zeichnungen sind Schemazeichnungen und dienen lediglich der Erläuterung des folgenden Ausführungsbeispiels.

### Es zeigen:

- Fig. 1: schematisch einen Aufbau eines öffentlichen Energieversorgungssystems mit einer Vorrichtung gemäß der Erfindung als Stromtankstelle,
- Fig. 2: schematisch einen Ablaufplan für den verbraucherseitigen Betrieb der Vorrichtung gemäß der Erfindung und
- Fig. 3: schematisch einen Ablaufplan für den energieerzeugungseinrichtungsseitigen Betrieb der Vorrichtung gemäß der Erfindung.

In Fig. 1 ist ein Energieversorgungssystem 10 dargestellt, welches Kohlekraftwerke 12 als Energieerzeugungseinrichtungen sowie ein Elektrofahrzeug 22 als elektrischen Verbraucher zeigt. Das Energieversorgungssystem 10 umfasst ferner ein Energieversorgungsnetz 14, welches die Energieerzeugungseinrichtungen, insbesondere die Kohlekraftwerke 12 mit den Verbrauchern, insbesondere das Elektrofahrzeug 22 zumindest zeitweise elektrisch miteinander koppeln kann. Verbunden ist das Energieversorgungsnetz 14 ferner mit Energieversorgern 16, die für den Betrieb des Energieversorgungsnetzes 14 sowie auch der Kohlekraftwerke 12 verantwortlich sind.

Bei dem Elektrofahrzeug 22 ist in der Verbindung mit dem Energieversorgungsnetz 14 eine Stromtankstelle 28 als Vorrichtung zur Abgabe von elektrischer Energie zwischengeschaltet. Die Stromtankstelle 28 dient zur lösbaren elektrischen Ankopplung von elektrischen Verbrauchern, hier Elektrofahrzeugen wie dem Elektrofahrzeug 22. Das Elektrofahrzeug 22 weist einen nicht näher bezeichneten elektrischen Energiespeicher in Form eines Blei-Säure-Akkumulators auf, mit dem der bestimmungsgemäße Betrieb des Elektrofahrzeugs 22 während der Nichtladephasen des Akkumulators gewährleistet werden kann. Der Akkumulator ist nicht in der Fig. 1 dargestellt. Die Stromtankstelle 28 weist ferner eine Energieabgabesteuerungseinheit 30 auf, mittels der elektrische Energie gesteuert an aufzuladende elektrische Energiespeicher wie dem Akkumulator des Elektrofahrzeugs 22 abgegeben werden kann. Die Energieabgabesteuerungseinheit 30 weist hierfür nicht näher bezeichnete Steuerungsmittel sowie eine Rechnereinrichtung auf, mittels der die Steuerungsmittel vorgebbar gesteuert werden können. Die Steuerungsmittel steuern den Energiefluss zu Steckkupplungen 26 der Stromtankstelle 28, von denen in Fig. 1 lediglich eine von mehreren dargestellt ist.

Die Steckkupplung 26 dient zum Einstecken eines Steckers 24, der über eine Leitung mit dem Elektrofahrzeug 22 verbunden ist und an welcher Leitung der Akkumulator des Elektrofahrzeugs 22 angeschlossen ist. Auf diese Weise kann über den Stecker 24 und die Steckkupplung 26 eine elektrische Verbindung zwischen der Stromtankstelle 28 und dem Elektrofahrzeug 22 hergestellt werden, indem beispielsweise ein Nutzer den Stecker 24 in die Steckkupplung 26 einsteckt.

Die Stromtankstelle 28 weist ferner einen kombinierten Energiebezugs- und Abgabezähler 32 auf, der mit einer Uhr 36 kommunikationstechnisch gekoppelt ist. Auf diese Weise lässt sich der Energieverbrauch zeitlich zuordnen, so dass eine Tarifsteuerung ermöglicht werden kann. Darüber hinaus ermöglicht der Energiebezugs- und Abgabezähler 32 eine Erfassung der an das Elektrofahrzeug 22 abgegebenen elektrischen Energie, so dass eine abrechnungsrelevante Position erzeugt werden kann.

Eine Energieabgabesteuerungseinheit 30 der Stromtankstelle 28 ist tarifgesteuert und verfügt über eine Schalteinheit 34, mittels der die elektrische Kopplung der Steckkupplung 26 mit dem Energieversorgungsnetz 14 hergestellt und eine elektrische Spannung geschaltet werden kann. Die Energieabgabesteuerungseinheit 30 weist einen Speicherbereich auf, in dem die aktuell verfügbaren Tarife sowohl für den Energiebezug als auch für die Energieabgabe gespeichert sind und ständig aktuell gehalten werden. Hierdurch kann immer eine aktuelle Übersicht über die verfügbaren Tarife erstellt werden, so dass sowohl ein Betreiber 18 der Stromtankstelle 28 den günstigsten Bezugstarif für elektrische Energie von dem jeweiligen Energieversorger 16 auswählen kann, als auch ein Nutzer des Elektrofahrzeugs 22 den für ihn jeweils günstigsten Tarif für die Abgabe von elektrischer Energie durch die Stromtankstelle 28 auswählen kann. So besteht die Möglichkeit, dass der Nutzer des Elektrofahrzeugs 22 einen Nachtladetarif auswählt, der einen besonders günstigen Strombezug ermöglicht, weshalb tagsüber die Steckkupplung 26 der Stromtankstelle 28 durch die Schalteinheit 34 abgeschaltet ist. Lediglich zu den entsprechenden Tarifzeiten, hier nachts, aktiviert die Schalteinheit 34 die Steckkupplung 26.

In der vorliegenden Ausgestaltung ist ferner vorgesehen, dass die Schalteinheit 34 sowie der Energiebezugs- und Abgabezähler 32 an entfernter Stelle angeordnet sind, beispielsweise an einem Parkplatz eines Kaufhauses, eines Wohnviertels oder dergleichen. Die Schalteinheit 34 ist fernsteuerbar und der Energiebezugs- und Abgabezähler 32 ist fernabfragbar ausgebildet. Hierfür weist die Schalteinheit 34 eine Kommunikationseinheit 38 auf, mittels der eine Kommunikationsverbindung über das GSM-Netz zur Energieabgabesteuerungseinheit 30 herstellbar ist. Natürlich kann hier auch eine leitungsgebundene Kommunikationsverbindung, beispielsweise über das Internet vorgesehen sein, die auch mit einer drahtlosen Kommunikationsverbindung gekoppelt sein kann. Beispielsweise kann auch eine Kombination von einer internetbasierten Kommunikationsverbindung und einer GSM-Kommunikationsverbindung vorgesehen sein.

Mittels der Energieabgabesteuerungseinheit 30 kann nun der Bezug von elektrischer Energie zeitbezogen erfasst werden. Darüber hinaus ermöglicht die Energieabgabesteuerungseinheit 30 die zeitbezogene Abgabe von elektrischer Energie an einen Verbraucher wie das Elektrofahrzeug 22. Mittels der Kommunikationseinheit 38 kann die Schalteinheit 34 durch die Energieabgabesteuerungseinheit 30 ferngesteuert werden. Zugleich ist vorliegend vorgesehen, dass die jeweils aktuelle Energieabgabe, die mittels des Energiebezugs- und Abgabezählers 32 erfasst wird, über die Kommunikationseinheit 38 in vorgebbaren, vorliegend äquidistanten Zeitabständen an die Energieabgabesteuerungseinheit 30 übermittelt wird.

Der Betreiber 18 der Stromtankstelle 28 steht über eine GPRS-Fernabfrageverbindung 20 mit der Stromtankstelle 28 und hier insbesondere mit der Energieabgabesteuerungseinheit 30 in Kommunikationsverbindung. Auf diese Weise kann der Betreiber 18 den aktuellen Energiebezug beziehungsweise die aktuelle Energieabgabe nachhalten und so abrechnungsrelevante Positionen erstellen, die zur Abrechnung gegenüber Nutzern der Stromtankstelle 28 verwendet werden können. Darüber hinaus steht der Betreiber 18 in Kommunikationsverbindung mit den Energieversorgern 16. Dies ermöglicht es, den Strombezug der Stromtankstelle 28 gegenüber den Energieversorgern 16 abzurechnen. Darüber hinaus erhält der Betreiber 18 von den Energieversorgern 16 die jeweiligen Stromlieferungstarife, so dass er für den Betrieb seiner Stromtankstelle 28 den jeweils für ihn günstigsten Tarif auswählen kann.

In der vorliegenden Ausgestaltung ist ferner vorgesehen, dass die Steckkupplung 26 eine nicht näher dargestellte Erkennungseinheit zur Erkennung der für den angeschlossenen Verbraucher geeigneten elektrischen Spannungsart aufweist. Die Erkennungseinheit ist vorliegend zum drahtlosen Auslesen eines ebenfalls nicht dargestellten, im Stecker 24 angeordneten Transponders ausgebildet, welcher Transponder die für den Akkumulator des Elektrofahrzeugs 22 relevanten Informationen abrufbar bereithält. Die abgefragten Informationen werden von der Erkennungseinheit an die Energieabgabesteuerungseinheit 30 übermittelt. Diese stellt über nicht näher dargestellte Umrichtermittel die elektrische Spannung an der Steckkupplung 26 geeignet ein. Darüber hinaus sind in der Energieabgabesteuerungseinheit 30 Abgabekennlinien für die anschließbaren Verbraucher hinterlegt, so dass der Akkumulator des Elektrofahrzeugs 22 mit einer für seinen Betrieb und seine Lebensdauer günstigen Ladeverlauf entsprechend einer Ladekennlinie geladen werden kann.

Natürlich weist die Stromtankstelle mehrere Anschlusseinheiten in Form von Steckkupplung 26 auf, von denen in Fig. 1 lediglich eine dargestellt ist. Die Steckkupplungen sowie die Energiebezugs- und Abgabezähler sind jeweils lokal an den entsprechenden örtlichen Stellen angeordnet und mittels der Energieabgabesteuerungseinheit 30 fernsteuerbeziehungsweise fernabfragbar.

Integriert in die Erkennungseinheit ist ferner eine Sicherungseinrichtung, die ebenfalls nicht dargestellt ist. Die Sicherungseinrichtung ist gekoppelt mit der Erkennungseinrichtung. Hierzu enthält der nicht dargestellte Transponder einen verschlüsselten Berechtigungskode, der ebenfalls mit den erforderlichen Betriebsdaten für den Akkumulator ausgelesen und durch die Sicherungseinrichtung geprüft wird. Ergibt die Prüfung, dass die Berechtigung vorliegt, erfolgt die Energieabgabe durch die Energieabgabesteuerungseinheit 30. Vorliegend ist vorgesehen, dass die Prüfung in regelmäßigen Zeitabständen, hier in einem 1-Minuten-Abstand regelmäßig wiederholt wird, um sicherzustellen, dass kein unberechtigter Dritter den Stecker 24 aus der Steckkupplung 26 entfernt und statt dessen mit einem anderen Stecker ein eigenes Gerät an die Steckkupplung 26 anschließt.

Um die Abrechnung der Energieabgabe gegenüber dem Nutzer zu vereinfachen, weist die Stromtankstelle 28 ferner eine Abrechnungseinheit 40 auf. Diese ermöglicht es, automatisch Transaktionen durchzuführen. Ist etwa eine Energieabgabe aufgrund des Entfernens des Steckers 24 aus der Steckkupplung 26 beendet, wird eine Abrechnungsposition erstellt, auf deren Basis eine Transaktion erfolgt, so dass bei einem Nutzerkonto des Nutzers des Elektrofahrzeugs 22 ein entsprechender, geldwerter Betrag abgebucht wird. Auf diese Weise kann ein kostengünstiger Betrieb der Stromtankstelle 28 erreicht werden.

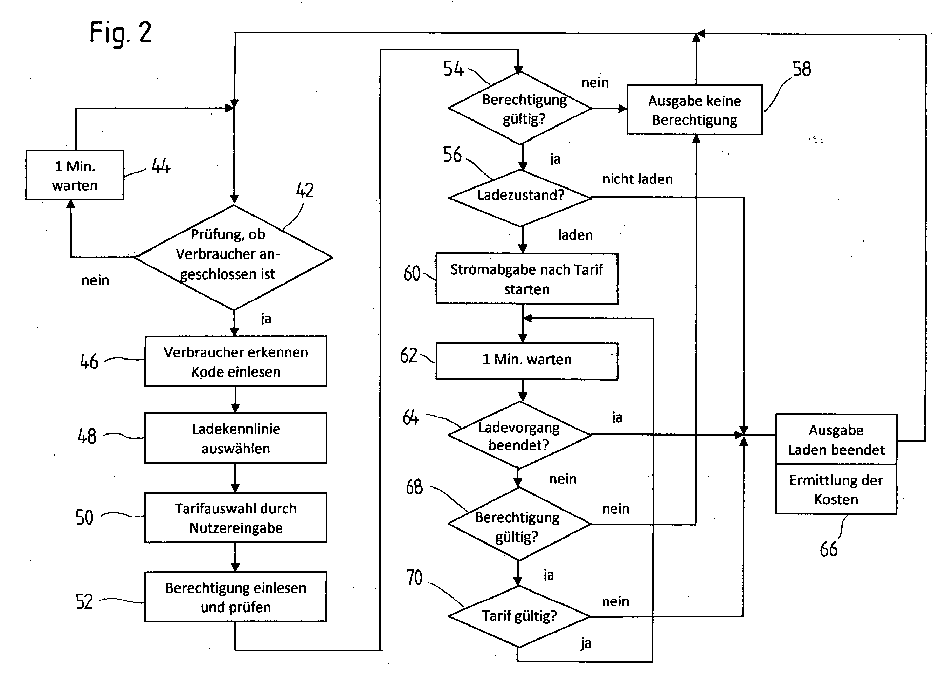

Fig. 2 zeigt nunmehr schematisch einen Verfahrensablauf, wie er für die Abgabe von elektrischer Energie durch die Stromtankstelle 28 vorgesehen sein kann. Dieser Verfahrensablauf kann durch die Energieabgabesteuerungseinheit 30 realisiert sein.

Das Verfahren beginnt mit Schritt 42, bei dem geprüft wird, ob ein Verbraucher angeschlossen ist. Dies wird mittels einer in der Steckkupplung 26 angeordneten Leseeinrichtung durchgeführt. Wird kein angeschlossener Verbraucher festgestellt, wird im Schritt 44 eine Wartezeit von einer Minute abgewartet, woraufhin die Prüfung gemäß Schritt 42 wiederholt wird. Wird ein angeschlossener Verbraucher bei der Prüfung gemäß Schritt 42 erkannt, wird zunächst mit Schritt 46 ein Kode, hier ein Berechtigungskode eingelesen. Anschließend erfolgt die Einstellung einer Ladekennlinie im Schritt 48, die für den Akkumulator des Fahrzeugs 22 am besten geeignet ist. In Schritt 50 erfolgt eine Tarifauswahl durch eine Nutzereingabe über eine nicht näher dargestellte und bezeichnete Eingabeeinheit, die vor Ort im Bereich der Steckkupplung 26 angeordnet ist. Der Nutzer bekommt hier die möglichen Tarife angezeigt und kann über eine menügeführte Auswahl den für ihn geeigneten Tarif auswählen. Vorliegend wird mit der Auswahl des Tarifs auch die Auswahl der Energieerzeugungseinrichtung vorgenommen. Im folgenden Schritt 52 wird die Berechtigung eingelesen und geprüft. Ist gemäß Schritt 54 die Berechtigung nicht gültig, erfolgt als nächstes gemäß Schritt 58 die Ausgabe auf einer nicht näher dargestellten Ausgabeeinheit, dass keine gültige Berechtigung vorliegt. Anschließend wird das Verfahren im Schritt 42 fortgeführt.

Liegt dagegen eine gültige Berechtigung bei der Prüfung gemäß Schritt 54 vor, so erfolgt als nächstes die Prüfung des Ladezustands des Akkumulators des Elektrofahrzeugs 22 gemäß Schritt 56. Hierzu kann über eine nicht näher dargestellte Kommunikationsverbindung der Ladezustand des Akkumulators des Elektrofahrzeugs 22 direkt abgefragt werden. Darüber hinaus besteht die Möglichkeit, durch kurze Energiepulse und Auswerten der entsprechenden Daten den Ladezustand des Akkumulators zu ermitteln. Ergibt die Prüfung des Ladezustands gemäß Schritt 56, dass der Akkumulator geladen ist, so erfolgt als nächstes gemäß Schritt 66 die Ausgabe auf der Ausgabeeinheit, dass das Laden beendet ist und die Kosten werden ermittelt. Das Verfahren wird in diesem Fall ebenfalls mit Schritt 42 fortgeführt.

Ergibt die Prüfung des Ladezustands gemäß Schritt 56, dass der Akkumulator geladen werden kann, erfolgt als nächstes gemäß Schritt 60 die Stromabgabe gemäß Tarif. Nach einer Wartezeit von einer Minute gemäß Schritt 62 erfolgt als nächstes die Prüfung gemäß Schritt 64, ob der Ladevorgang beendet werden soll. Dies kann beispielsweise durch eine Eingabe des Nutzers, aber auch durch eine Prüfung des Ladezustands gegeben sein, die ergibt, dass der Akkumulator nunmehr geladen ist. Die Wartezeit kann natürlich bedarfsgerecht angepasst werden und/oder variabel sein. Soll der Ladezustand beendet werden, wird das Verfahren gemäß Schritt 66 wie zuvor fortgeführt.

Ergibt die Abfrage gemäß Schritt 64, dass der Ladevorgang nicht beendet werden soll, erfolgt als nächstes erneut die Prüfung gemäß Schritt 68, ob die Berechtigung gültig ist. Ist die Berechtigung nicht gültig, erfolgt die Ausgabe, dass keine Berechtigung vorliegt gemäß Schritt 58 und das Verfahren wird, wie dort entsprechend angegeben, fortgeführt.

Liegt dagegen eine Berechtigung bei der Prüfung gemäß Schritt 68 vor, wird als nächstes die Gültigkeit des Tarifs gemäß Schritt 70 abgefragt. Ist der Tarif nicht mehr gültig, beispielsweise weil er zeitlich abgelaufen ist oder nur außerhalb der aktuellen Zeit verfügbar ist, wird das Verfahren mit Schritt 66 fortgeführt. Ist der Tarif dagegen bei der Prüfung gemäß Schritt 70 gültig, so erfolgt eine Fortführung des Verfahrens mit Schritt 62.

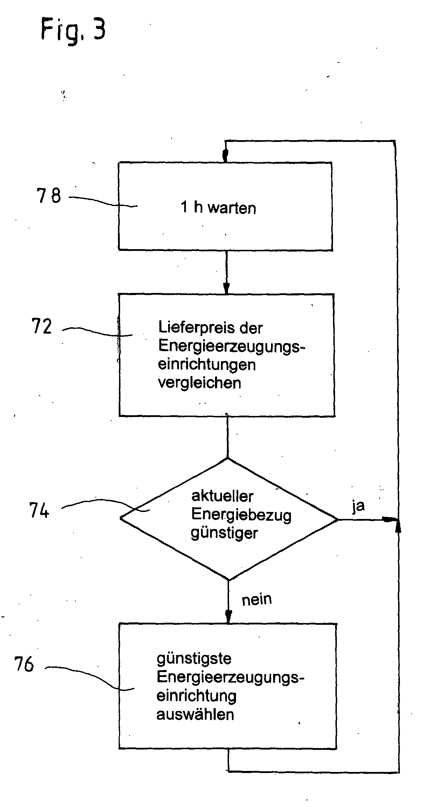

Fig. 3 zeigt nun einen möglichen Verfahrensablauf, wie er für den Bezug von elektrischer Energie von den Energieversorgern 16 vorgesehen sein kann. Das Verfahren beginnt mit Schritt 72, gemäß dem Lieferpreise der Energieerzeugungseinrichtungen 12 der Energieversorger 16 miteinander verglichen werden. Diese sind zuvor an den Betreiber 18 übermittelt worden. Als nächstes erfolgt gemäß Schritt 74, ob der aktuell eingestellte Energiebezug am günstigsten ist. Ergibt die Prüfung, dass der günstigste Energiebezug vorliegt, wird das Verfahren gemäß Schritt 78 fortgeführt, indem eine Wartezeit von einer Stunde vorgegeben wird. Nach dem Ablauf der Wartezeit gemäß Schritt 78 erfolgt erneut der Vergleich der Lieferpreise gemäß Schritt 72. Ergibt die Prüfung gemäß Schritt 74 dagegen, dass ein anderer Tarif günstiger ist, so wird gemäß Schritt 76 die günstigste Energieerzeugungseinrichtung 12 ausgewählt. Das Verfahren wird dann anschließend mit Schritt 78 fortgeführt.

Das in den Figuren dargestellte Ausführungsbeispiel dient lediglich der Erläuterung der Erfindung und ist für diese nicht beschränkend. Insbesondere können Schritte des Verfahrens vertauscht oder kombiniert werden. Wartezeiten können fix oder variabel gestaltet sein und ferner vom Eintreten von vorgebbaren Bedingungen abhängig sein.

### Bezugszeichenliste:

- 10: Energieversorgungssystem
- 12: Kohlekraftwerke
- 14: Energieversorgungsnetz
- 16: Energieversorger
- 18: Betreiber der Stromtankstelle
- 20: GPRS-Fernabfrageverbindung
- 22: Elektrofahrzeug
- 24: Stecker
- 26: Steckerkupplung
- 28: Stromtankstelle
- 30: Energieabgabesteuerungseinheit
- 32: Energiebezugs- und Abgabezähler
- 34: Schalteinheit
- 36: Uhr
- 38: Kommunikationseinheit
- 40: Abrechnungseinheit
- 42 bis 78: Verfahrensschritte

## Patentansprüche

1. Vorrichtung zur Abgabe von elektrischer Energie, mit einer elektrischen Anschlusseinheit zur lösbaren elektrischen Ankopplung eines elektrischen Verbrauchers, insbesondere eines aufzuladenden elektrischen Energiespeichers, einer insbesondere tarifgesteuerten Energieabgabesteuerungseinheit zum Schalten einer elektrischen Spannung, einer elektrischen Verbindung zu wenigstens einer Energieerzeugungseinrichtung zur Erzeugung elektrischer Energie, einen Energiebezugszähler sowie einen Energieabgabezähler.

2. Vorrichtung nach Anspruch 1, **gekennzeichnet durch** eine Spannungswandlereinheit, mittels der, vorzugsweise automatisch, die für den Verbraucher geeignete elektrische Spannungsart bereitstellbar ist.

3. Vorrichtung nach Anspruch 1 oder 2, **gekennzeichnet durch** eine Erkennungseinheit zur Erkennung der für einen angeschlossenen Verbraucher geeigneten elektrischen Spannungsart.

4. Vorrichtung nach einem der Ansprüche 1 bis 3, **dadurch gekennzeichnet, dass** die Anschlusseinheit für einen kontaktlosen Anschluss des Verbrauchers ausgebildet ist.

5. Vorrichtung nach einem der Ansprüche 1 bis 4, **dadurch gekennzeichnet, dass** die Anschlusseinheit für einen Anschluss mehrerer, insbesondere unterschiedlicher Verbraucher ausgebildet ist.

6. Vorrichtung nach einem der Ansprüche 1 bis 5, **dadurch gekennzeichnet, dass** die Anschlusseinheit eine Sicherungseinrichtung aufweist.

7. Vorrichtung nach einem der Ansprüche 1 bis 6, **gekennzeichnet durch** eine Selektionseinheit, mittels der die elektrische Verbindung zu einer von mehreren Energieerzeugungseinrichtungen auswählbar, insbesondere herstellbar ist.

8. Vorrichtung nach einem der Ansprüche 1 bis 7, **gekennzeichnet durch** eine Abrechnungseinheit zur Abrechnung der abgegebenen und/oder bezogenen elektrischen Energie.

9. Vorrichtung nach einem der Ansprüche 1 bis 8, **gekennzeichnet durch** eine Einrichtung zur Parkzeiterfassung.

10. Verfahren zum Betrieb einer Vorrichtung zur Abgabe von elektrischer Energie, wobei ein elektrischer Verbraucher, insbesondere ein aufzuladender, mobiler elektrischer Energiespeicher lösbar an die Vorrichtung angeschlossen wird, elektrische Energie von einer Energieerzeugungseinrichtung bezogen, der Bezug mittels eines Energiebezugszählers erfasst und mittels einer tarifgesteuerten, schaltenden Energieabgabesteuerungseinheit über einen Energieabgabezähler an den Verbraucher abgegeben wird.

11. Verfahren nach Anspruch 10, **dadurch gekennzeichnet, dass** die elektrische Spannungsart des Verbrauchers, vorzugsweise automatisch, ermittelt und ausgewählt wird.

12. Verfahren nach Anspruch 10 oder 11, **dadurch gekennzeichnet, dass** der Bezug der elektrischen Energie von der günstigsten Energieerzeugungseinrichtung ausgewählt wird.

13. Verfahren nach einem der Ansprüche 10 bis 12, **dadurch gekennzeichnet, dass** vor und/oder während der Abgabe elektrischer Energie eine Berechtigung des angeschlossenen Verbrauchers geprüft wird.

14. Verfahren nach einem der Ansprüche 10 bis 13, **dadurch gekennzeichnet, dass** eine Menge der abgegebenen elektrischen Energie anhand des tarifgesteuerten Energieabgabezählers abgerechnet wird.

15. Verfahren nach einem der Ansprüche 10 bis 14, **dadurch gekennzeichnet, dass** die Energieabgabe in insbesondere durch den Nutzer vorgebbaren Zeitpunkten begonnen und/oder beendet wird und/oder in insbesondere durch den Nutzer vorgebbaren Zeiträumen erfolgt.

16. Verfahren nach einem der Ansprüche 10 bis 15, **dadurch gekennzeichnet, dass** eine verbraucherbezogene Energieabgabekennlinie verwendet wird.

## Geänderte Patentansprüche

### Geänderte Patentansprüche gemäss Regel 137(2) EPÜ.

**1.** Vorrichtung (28) zur Abgabe von elektrischer Energie, mit einer elektrischen Anschlusseinheit (26) zur lösbaren elektrischen Ankopplung eines elektrischen Verbrauchers (22), einer Energieabgabesteuerungseinheit (30) zum Schalten einer elektrischen Spannung, einer elektrischen Verbindung (14) zu wenigstens einer Energieerzeugungseinrichtung (12) zur Erzeugung elektrischer Energie, einen Energiebezugszähler (32) sowie einen Energieabgabezähler, wobei die Energieabgabesteuerungseinheit (30) tarifgesteuert ist, so dass die Abgabe von Energie anhand durch den Nutzer auswählbarer und/oder vorgebbarer Tarife erfolgt.

**2.** Vorrichtung nach Anspruch 1, **gekennzeichnet durch** eine Spannungswandlereinheit, mittels der die für den Verbraucher (22) geeignete elektrische Spannungsart bereitstellbar ist.

**3.** Vorrichtung nach Anspruch 1 oder 2, **gekennzeichnet durch** eine Erkennungseinheit zur Erkennung der für einen angeschlossenen Verbraucher (22) geeigneten elektrischen Spannungsart.

**4.** Vorrichtung nach einem der Ansprüche 1 bis 3, **dadurch gekennzeichnet, dass** die Anschlusseinheit (26) für einen kontaktlosen Anschluss des Verbrauchers (22) ausgebildet ist.

**5.** Vorrichtung nach einem der Ansprüche 1 bis 4, **dadurch gekennzeichnet, dass** die Anschlusseinheit (26) für einen Anschluss mehrerer Verbraucher ausgebildet ist.

**6.** Vorrichtung nach einem der Ansprüche 1 bis 5, **dadurch gekennzeichnet, dass** die Anschlusseinheit (26) eine Sicherungseinrichtung aufweist.

**7.** Vorrichtung nach einem der Ansprüche 1 bis 6, **gekennzeichnet durch** eine Selektionseinheit, mittels der die elektrische Verbindung zu einer von mehreren Energieerzeugungseinrichtungen (12) auswählbar ist.

**8.** Vorrichtung nach einem der Ansprüche 1 bis 7, **gekennzeichnet durch** eine Abrechnungseinheit (40) zur Abrechnung der abgegebenen und/oder bezogenen elektrischen Energie.

**9.** Vorrichtung nach einem der Ansprüche 1 bis 8, **gekennzeichnet durch** eine Einrichtung zur Parkzeiterfassung.

**10.** Verfahren zum Betrieb einer Vorrichtung (28) zur Abgabe von elektrischer Energie, wobei ein elektrischer Verbraucher (22) lösbar an die Vorrichtung (28) angeschlossen wird, elektrische Energie von einer Energieerzeugungseinrichtung (12) bezogen, der Bezug mittels eines Energiebezugszählers (32) erfasst und mittels einer tarifgesteuerten, schaltenden Energieabgabesteuerungseinheit (30) über einen Energieabgabezähler (32) an den Verbraucher (22) abgegeben wird, wobei die Abgabe von Energie anhand durch den Nutzer auswählbarer und/oder vorgebbarer Tarife erfolgt.

**11.** Verfahren nach Anspruch 10, **dadurch gekennzeichnet, dass** die elektrische Spannungsart des Verbrauchers ermittelt und ausgewählt wird.

**12.** Verfahren nach Anspruch 10 oder 11, **dadurch gekennzeichnet, dass** der Bezug der elektrischen Energie von der günstigsten Energieerzeugungseinrichtung (12) ausgewählt wird.

**13.** Verfahren nach einem der Ansprüche 10 bis 12, **dadurch gekennzeichnet, dass** vor und/oder während der Abgabe elektrischer Energie eine Berechtigung des angeschlossenen Verbrauchers (22) geprüft wird.

**14.** Verfahren nach einem der Ansprüche 10 bis 13, **dadurch gekennzeichnet, dass** eine Menge der abgegebenen elektrischen Energie anhand des tarifgesteuerten Energieabgabezählers (32) abgerechnet wird.

**15.** Verfahren nach einem der Ansprüche 10 bis 14, **dadurch gekennzeichnet, dass** die Energieabgabe in vorgebbaren Zeitpunkten begonnen und/oder beendet wird und/oder in vorgebbaren Zeiträumen erfolgt.

**16.** Verfahren nach einem der Ansprüche 10 bis 15, **dadurch gekennzeichnet, dass** eine verbraucherbezogene Energieabgabekennlinie verwendet wird.
